# DEMANDE DE BREVET EUROPEEN

(11) **EP 2 911 240 A1**
(43) Date de publication de la demande: **26.08.2015**
(21) Numéro de dépôt: 15155836.8
(22) Date de dépôt: 19.02.2015
(51) Int. Cl.: H01Q 3/24

(54) **Systeme antennaire iff**

(30) Priorité: 21.02.2014 FR 1400459
(71) Demandeur: Thales, 92400 Courbevoie (FR)
(72) Inventeur: Jacques, Philippe, 92622 GENNEVILLIERS Cedex (FR); Tchoffo-Talom, Friedman, 92622 GENNEVILLIERS Cedex (FR); Triconnet, Thierry, 92622 GENNEVILLIERS Cedex (FR)
(74) Mandataire: Dudouit, Isabelle

(57) **Abrégé**

Système antennaire pour interrogateur-répondeur IFF caractérisé en ce qu'il comporte en combinaison au moins les éléments suivants :
Une antenne comprenant une portion cylindrique ou semi-cylindrique comprenant au moins deux éléments antennaires, l'antenne étant relié à un commutateur composé de S voies, ledit commutateur étant relié à un module de gestion de la d'alimentation desdits éléments antennaires adapté à générer plusieurs faisceaux fin d'ouverture [-α, +α] afin de couvrir un domaine angulaire fixé par l'utilisation.

## Description

L'objet de l'invention concerne un système interrogateur d'identification ami/ennemi, connu sous l'abréviation anglo-saxonne IFF (Identification Friend or Foe), à panneaux antennaires fixes permettant de couvrir un domaine angulaire de Γ° par balayage électronique, par exemple 180°.

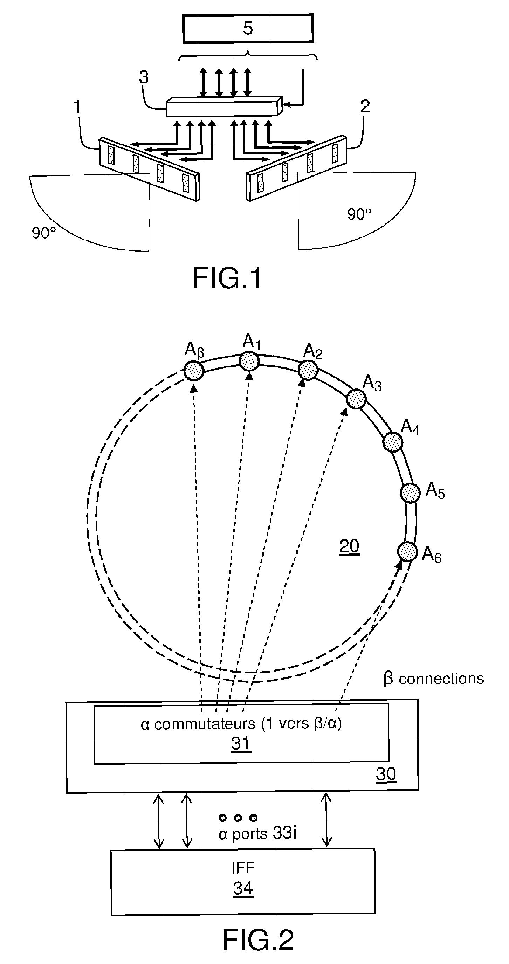

La figure 1 schématise un exemple de système à panneaux fixes avec deux antennes planes utilisées pour les systèmes IFF. Les deux antennes 1, 2 comprennent chacune quatre éléments antennaires 1₁, 1₂, 1₃, 1₄, 2₁, 2₂, 2₃, 2₄, permettant à chaque antenne d'avoir un diagramme de couverture de 90°. Un commutateur 3 (4x1 => 2) est inséré entre les deux panneaux antennaires et un interrogateur IFF, 5, ce qui permet d'obtenir une couverture de 180° pour le système IFF. Ce dispositif assez simple possède certains défauts qui ont un impact significatif sur les performances IFF du système final à savoir :
- on observe des déformations des diagrammes antennaires à dépointages élevés qui impactent les performances de localisation,
- la géométrie du diagramme entraîne des ambiguïtés de localisation en gisement en fonction de l'altitude des cibles à dépointages élevés,
- des pertes de gain à dépointages élevés impactent la portée du système IFF.

Le brevet US 4451831 un système de commutation comprenant des coupleurs 3dB et plusieurs étages de déphasage.

Dans la suite de la description, on désigne par « matrice de commutation » ou « commutateur », un module de commutation comprenant plusieurs commutateurs. L'expression « élément antennaire » ou « élément rayonnant » désigne un élément antennaire rayonnant d'une antenne.

Un des objectifs de la présente invention est de proposer un système antennaire IFF simple qui résout notamment les problèmes non gérés par les dispositifs de l'art antérieur. Le système antennaire selon l'invention utilise notamment une antenne cylindrique ou cylindrique sur au moins une partie, couplée à un commutateur simple et à un interrogateur IFF à balayage électronique. Le commutateur est utilisé pour commuter des sous réseaux d'antenne comprenant plusieurs éléments antennaires, dont le nombre et la séquence de commutation vont être choisis afin d'obtenir un angle de couverture souhaitée pour une utilisation donnée. Les capacités de balayage de l'interrogateur sont utilisées pour des pointages fins sur chaque sous réseau.

L'invention concerne un système antennaire pour interrogateur-répondeur IFF comprenant au moins α ports, une matrice de commutation, un module de logique de gestion de commutation, caractérisé en ce qu'il comporte au moins les éléments suivants: une antenne comprenant au moins une portion cylindrique, l'antenne comprenant au moins β éléments antennaires Aᵢ, avec β au moins égal à 2 et β étant un multiple des α ports de l'interrogateur-répondeur IFF, chaque élément antennaire Aᵢ est relié à la matrice de commutation ayant pour fonction de mettre en relation un commutateur avec un élément antennaire Ai, le module de gestion est adapté à commuter indépendamment chaque port de l'interrogateur IFF vers les éléments antennaires, par commutation d'un simple port et par recombinaison des lois de phase de l'interrogateur.

Le module de logique est, par exemple, adapté à exécuter le passage du sous réseau n (Aₙ, Aₙ₊₁ ...A_{n-1+β}) au sous réseau n+1 (Aₙ₊₁, Aₙ₊₂ ...A_{n+β}) par activation du commutateur relié à l'élément rayonnant Aₙ vers l'élément rayonnant A_{n+α}, α correspond au nombre d'éléments rayonnants à piloter et au nombre de commutateurs.

L'antenne peut comporter 16 éléments antennaires, regroupés par 4 selon plusieurs sous-réseaux.

L'antenne du système est, par exemple, une antenne émission/réception.

Le système peut comporter une antenne pour le traitement de la suppression des lobes secondaires à l'interrogation

Le domaine angulaire visé est, par exemple, compris entre 45° et 360°.

L'invention concerne aussi un procédé mis en oeuvre dans le système antennaire de l'invention comportant les caractéristiques précitées, le procédé est caractérisé en ce qu'il comporte au moins les étapes suivantes :
- sélectionner un premier sous-réseau n (Aₙ, Aₙ₊₁ ...A_{n-1+β}), activer les éléments rayonnants du premier sous-réseau afin de produire une première couverture angulaire, appliquer une première loi de phase pour les éléments rayonnants du sous-réseau sélectionné,
- sélectionner un sous-réseau suivant n+1 (Aₙ₊₁, Aₙ₊₂ ...A_{n+β}) par activation du commutateur relié à l'élément rayonnant Aₙ vers l'élément rayonnant A_{n+α}, α correspond au nombre d'éléments rayonnants à piloter et au nombre de commutateurs, appliquer une nouvelle loi de phase pour les éléments rayonnants sélectionnés.

D'autres caractéristiques et avantages du procédé et du système selon l'invention apparaîtront mieux à la lecture de la description qui suit d'un exemple de réalisation donné à titre illustratif et nullement limitatif annexé des figures qui représentent :
- La figure 1, un exemple de système antennaire selon l'art antérieur pour une couverture de 180°,
- La figure 2, un exemple de système antennaire selon l'invention,
- Les figures 3.1, 3.2, 3.3, un exemple de séquencement des étapes d'activation des éléments antennaires, et
- La figure 4, une illustration du fonctionnement global du système pour une couverture de 180°.

La figure 2 représente un système antennaire comprenant une antenne 20 semi-cylindrique comprenant β éléments rayonnants Ai ayant chacun une couverture de +/- γ°, afin d'obtenir une couverture de Γ°, par exemple, 180°. Les β éléments rayonnants Ai vont être activés par groupe, ou sous-réseaux, un groupe comprenant par exemple α éléments rayonnants. Le nombre β est un nombre multiple de α, qui est lui-même supérieur à 2.

L'antenne semi-cylindrique 20 est reliée par des moyens connus de l'Homme du métier à un module de pilotage 30 d'activation des éléments antennaires qui comporte une matrice de commutation 31 comprenant une logique de commande adaptée à activer les commutateurs 31i dont le nombre est, par exemple, égal au nombre α d'éléments rayonnants constituant un sous-réseau. La matrice de commutation va aiguiller les ports radiofréquence RF, 33, de l'interrogateur IFF, 34, à balayage électronique connu de l'homme du métier, comprenant une chaîne d'émission/réception, vers les éléments antennaires qui vont être sélectionnés pour obtenir la couverture angulaire souhaitée.

Afin de mieux faire comprendre l'invention, un exemple va être donné dans le cas où la matrice de commutation comprend quatre commutateurs 31₁, 31₂, 31₃, 31₄ indépendants (1 vers 4) de façon à obtenir la couverture angulaire désirée. La couverture angulaire de 180° est réalisée, dans cet exemple, par un équivalent de treize antennes à quatre éléments rayonnants. Chaque élément rayonnant va couvrir une ouverture ou un angle d'ouverture d'environ 12°, excepté le premier élément antennaire A₁ et le dernier élément antennaire A₁₆. Ce système permet d'éviter de fonctionner à des valeurs de dépointages élevées et donc de palier les défauts d'antennes planes de l'art antérieur.

Le fonctionnement du système va prendre en compte un premier sous-réseau de quatre éléments rayonnants, il va ensuite activer chaque élément antennaire ou rayonnant, un élément antennaire étant relié à un port RF 33i de l'interrogateur IFF au moyen d'un des quatre commutateurs 31 i. Puis, le système va sélectionner un deuxième sous-réseau de quatre antennes élémentaires par commutation d'une voie en utilisant la matrice de commutation. L'algorithme de commutation sera exécuté afin d'activer tous les éléments antennaires de l'antenne cylindrique, afin de couvrir un domaine angulaire fixé au préalable, dans l'exemple de 180°.

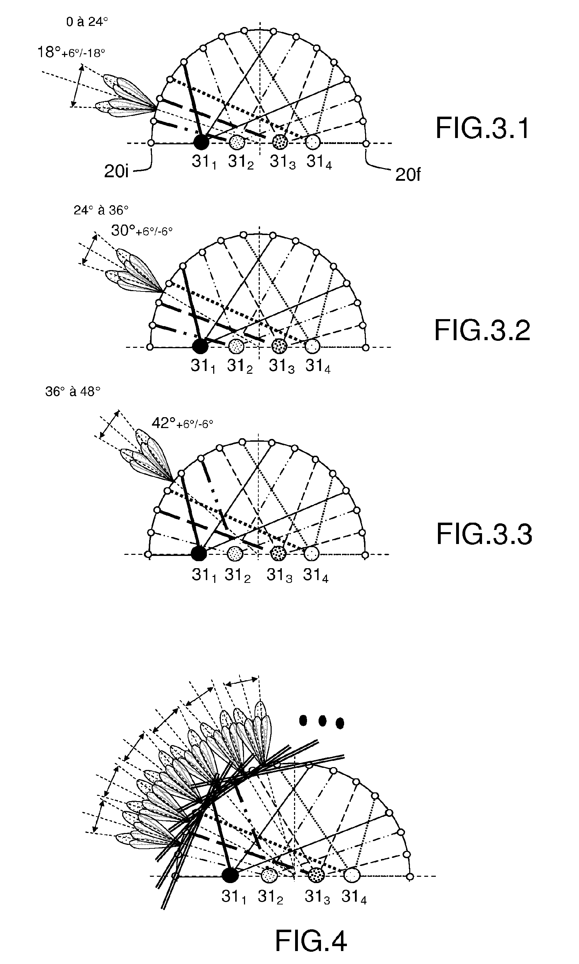

Les figures 3.1, 3.2, 3.3 illustrent trois exemples de séquences de pilotage de faisceaux.

Par exemple, la figure 3.1 représente le pilotage du premier faisceau antennaire pour un premier sous-réseau constitué des quatre premiers éléments antennaires rayonnants, A₁, A₂, A₃ et A₄, en démarrant d'une première extrémité 20i de l'antenne semi-cylindrique 20 pour un balayage ou pointage entre 0° et 24° réalisé par l'interrogateur IFF en jouant sur les déphasages de chaque élément antennaire selon une méthode connue de l'homme du métier. Le schéma de commutation pour cette figure associe l'antenne A₁, via le commutateur 31₁ à la chaine d'émission/réception du système IFF, l'antenne A₂ via le commutateur 31₂ à la chaine d'émission/réception, l'antenne A₃ via le commutateur 31₃ à la chaine d'émission/réception, l'antenne A₄ via le commutateur 31₄ à la chaine d'émission/réception.

La figure 3.2 illustre le passage au sous-réseau antennaire suivant constitué des éléments rayonnants A₂, A₃, A₄ et A₅. Ce passage du premier sous-réseau au deuxième sous-réseau s'effectue par une simple commutation du premier élément rayonnant A₁ vers le cinquième A₅, c'est-à-dire que le commutateur 31₁ va permettre l'activation de l'élément rayonnant A₅ à la place de l'élément rayonnant A₁. Le schéma de commutation associe l'antenne A₅, via le commutateur 31₁ à la chaine d'émission/réception du système IFF 34, l'antenne A₂ via le commutateur 31₂ à la chaine d'émission/réception, l'antenne A₃ via le commutateur 31₃ à la chaine d'émission/réception, l'antenne A₄ via le commutateur 31₄ à la chaine d'émission/réception. Ce deuxième sous-réseau sera utilisé pour les balayages ou pointages entre 24° et 36°. Les nouvelles lois de phase sont pilotées par l'interrogateur IFF selon une méthode connue de l'Homme du métier.

La figure 3.3 illustre le balayage ou pointage entre 36° et 48°. Dans ce cas, un troisième sous-réseau d'éléments rayonnants est activé. Il est réalisé par une nouvelle simple commutation de l'élément rayonnant A₃ vers l'élément rayonnant A₆, le commutateur 31₂ permettant d'activer ce dernier élément rayonnant. Le troisième sous-réseau est formé des éléments rayonnants activés A₃, A₄, A₅ et A₆. Le schéma de commutation associe l'antenne A₅, via le commutateur 31₁ à la chaine d'émission/réception du système IFF 34, l'antenne A₆ via le commutateur 31₂ à la chaine d'émission/réception, l'antenne A₃ via le commutateur 31₃ à la chaine d'émission/réception, l'antenne A₄ via le commutateur 31₄ à la chaine d'émission/réception.

La figure 4 représente le résultat de l'activation de tous les éléments rayonnants de l'antenne semi-cylindrique 20 en suivant les séquences explicitées aux figures 3.1 à 3.3 et en réitérant ces séquences de façon telle que tous les éléments antennaires aient été activés, le dernier élément antennaire A₁₆ sur la figure étant situé à la deuxième extrémité 20f de l'antenne.

Après l'exemple donné pour des sous-réseaux comprenant quatre éléments rayonnants, pour faire comprendre l'invention, on va tenter de généraliser le déroulement des étapes du procédé selon l'invention à une antenne comportant β éléments rayonnants. On considère un interrogateur à balayage électronique ayant la capacité de piloter α éléments rayonnants, avec α au moins égal à deux, figure 2, dont le fonctionnement est connu de l'homme du métier.

L'antenne cylindrique 20 ou partiellement cylindrique est constituée d'un nombre β d'éléments rayonnants (A₁, A₂ ... A_{β}), multiple des α éléments rayonnants à piloter par l'interrogateur IFF. L'antenne cylindrique 20 est associée à un module de pilotage d'activation 30 des éléments antennaires que comporte une matrice de commutation 31 comprenant une logique de commande adaptée à activer les α différents commutateurs 31₁, .., 31_{α} de façon à obtenir la couverture Γ° désirée. L'invention consiste notamment à utiliser la matrice de commutation simple de α commutateurs, chacun des commutateurs ayant la possibilité de commuter indépendamment de 1 vers « β/α » éléments.

Le passage du sous réseau n d'éléments antennaires (Aₙ, Aₙ₊₁ ...A_{n-1+β}) au sous réseau n+1 d'éléments antennaires (Aₙ₊₁, Aₙ₊₂ ...A_{n+β}) est réalisé simplement par activation du commutateur 31ₙ relié à l'élément rayonnant Aₙ vers l'élément rayonnant A_{n+α}, α correspond au nombre d'éléments rayonnants à piloter et au nombre de commutateurs. La logique des nouvelles lois de phase liée à ce nouveau sous réseau est gérée par l'interrogateur à balayage électronique selon un principe connu de l'homme du métier.

En généralisant, le principe mis en oeuvre: la gestion dynamique de l'activation des éléments antennaires s'effectue de la manière suivante; en considérant β éléments rayonnants et α commutateurs avec β égal à un nombre entier M fois α, avec M≥1, on observe un saut permettant l'activation d'un élément antennaire à un autre élément antennaire occupant la même position dans un sous-réseau par pas égal à α.

L'exemple est donné pour α éléments antennaires à activer et pour quatre séquences correspondant à la formation de quatre sous-réseaux. Le tableau suivant correspond à quatre séquences mais pourrait être complété avec les séquences au-delà. On voit que l'élément antennaire A₅ qui occupe la position 1 dans le deuxième sous-réseau est en liaison avec le commutateur 31₁ qui a permis l'activation de l'élément antennaire A₁ du premier sous-réseau.

| | 1^{er} sous-réseau | 2^{ème} sous-réseau | 3^{eme} sous-réseau | 4^{eme} sous-réseau |
|---|---|---|---|---|
| 31₁ | A₁ | A₅= A_{1+ α} | A₅ | A₅ |
| 31₂ | A₂ | A₂ | A₆= A_{2+ α} | A₆ |
| ·· | ·· | ·· | ·· | ·· |
| 31_{α-1} | A_{α-1} | A₃ | A₃ | A₇=A_{3+ α} |
| 31_{α} | A_{α} | A₄ | A₄ | A₄ |

Les éléments antennaires sélectionnés sont adaptés pour couvrir des secteurs angulaires consécutifs.

Les exemples donnés ci-dessus s'appliquent à des antennes travaillant en émission et/ou en réception.

Pour des applications spécifiques comme le mode S, une antenne de contrôle peut être ajoutée pour notamment le traitement de la suppression des lobes secondaires à l'interrogation ou ISLS.

Le système selon l'invention peut être mis en place sur tout type de porteurs, par exemple un avion, un hélicoptère, etc.

Le système antennaire selon l'invention évite le fonctionnement du système à des dépointages importants et permet donc d'améliorer fortement les performances de localisation des cibles. Il évite d'atténuer les pertes de portée à dépointage élevé, ce qui conduit à réduire voire supprimer les pertes de gain de l'antenne. Ce système compte tenu de sa simplicité, combinant un moyen de commutation simple à du pointage électronique pour réaliser le balayage, permet peut être installé sur tous types de plates-formes aussi bien aéroportées que sols ou navales.

## Revendications

1. Système antennaire pour interrogateur-répondeur IFF (34) comprenant au moins α ports RF, une matrice de commutation (31), un module de logique de gestion (30) de commutation, **caractérisé en ce qu'**il comporte au moins les éléments suivants: une antenne (20) comprenant une portion cylindrique ou semi-cylindrique comprenant au moins β éléments antennaires Aᵢ, avec β au moins égal à 2 et β étant un multiple des α ports (33i) de l'interrogateur-répondeur IFF, chaque élément antennaire Aᵢ est relié à la matrice de commutation (31) ayant pour fonction de mettre en relation un commutateur (31 i) avec un élément antennaire Ai, le module de gestion est adapté à commuter indépendamment chaque port de l'interrogateur IFF vers les éléments antennaires, par commutation d'un simple port et par recombinaison des lois de phase de l'interrogateur.

2. Système selon la revendication 1 **caractérisé en ce que** le module de logique de gestion (30) est adapté à exécuter le passage du sous réseau n d'éléments antennaires (Aₙ, Aₙ₊₁ ...A_{n-1+β}) au sous réseau n+1 d'éléments antennaires (Aₙ₊₁, Aₙ₊₂ ...A_{n+β}) par activation du commutateur (31ₙ) relié à l'élément rayonnant Aₙ vers l'élément rayonnant A_{n+α}, α correspond au nombre d'éléments rayonnants à piloter et au nombre de commutateurs

3. Système antennaire selon l'une des revendications 1 à 2 **caractérisé en ce que** l'antenne comporte 16 éléments antennaires, regroupés par 4 dans plusieurs sous-réseaux.

4. Système antennaire selon l'une des revendications précédentes **caractérisé en ce que** l'antenne (20) est une antenne émission/réception.

5. Système antennaire selon l'une des revendications précédentes **caractérisé en ce qu'**il comporte une antenne pour le traitement de la suppression des lobes secondaires à l'interrogation.

6. Système antennaire selon l'une des revendications précédentes **caractérisé en ce que** le domaine angulaire est compris entre 45° et 360°.

7. Procédé mis en oeuvre dans le système antennaire selon l'une des revendications 1 à 6 **caractérisé en ce qu'**il comporte au moins les étapes suivantes :
• sélectionner un premier sous-réseau n (Aₙ, Aₙ₊₁ ...A_{n-1+β}), activer les éléments rayonnants du premier sous-réseau afin de produire une première couverture angulaire, appliquer une première loi de phase pour les éléments rayonnants du sous-réseau sélectionné,
• sélectionner un sous-réseau suivant n+1 (Aₙ₊₁, Aₙ₊₂ ...A_{n+β}) par activation du commutateur relié à l'élément rayonnant Aₙ vers l'élément rayonnant A_{n+α}, α correspond au nombre d'éléments rayonnants à piloter et au nombre de commutateurs, appliquer une nouvelle loi de phase pour les éléments rayonnants sélectionnés.
